# EUROPEAN PATENT APPLICATION

(11) **EP 4 509 222 A1**
(43) Date of publication of application: **19.02.2025**
(21) Application number: 23790947.8
(22) Date of filing: 16.03.2023
(51) Int. Cl.: B05C 1/08, H01M 4/04, H01M 4/139

(54) **COATING DEVICE, AND SYSTEM AND METHOD FOR PRODUCING ELECTRODE PLATE**

(30) Priority: 18.04.2022 CN 202210403287
(71) Applicant: Contemporary Amperex Technology Co., Limited, Ningde, Fujian 352100 (CN)
(72) Inventor: LIN, Zhuhua, Ningde, Fujian 352100 (CN); TANG, Zhenguang, Ningde, Fujian 352100 (CN); YANG, Pengjun, Ningde, Fujian 352100 (CN); SHANG, Hongwu, Ningde, Fujian 352100 (CN)
(74) Representative: Gong, Jinping
(86) International application number: PCT/CN2023/081938
(87) International publication number: WO 2023/202286

(57) **Abstract**

A coating apparatus, and an electrode plate production system and method are provided, where the coating apparatus includes a roller (1) capable of rotating around its axis. The roller (1) includes: a body portion (11); and a protrusion portion (12) disposed on an outer surface of the body portion (11) and extending along an entire circumference of the body portion (11). A surface of the protrusion portion (12) located on an outermost side in a radial direction of the body portion (11) serves as a coating surface (T).

## Description

### CROSS-REFERENCE TO RELATED APPLICATIONS

This application is based on and claims priority to Chinese Patent Application No. 202210403287.7, filed on April 18, 2022, and the content disclosed in this Chinese application is incorporated herein by reference in its entirety.

### TECHNICAL FIELD

This application relates to a coating apparatus, and an electrode plate production system and method.

### BACKGROUND

With the advantages such as high energy density, high power density, long cycle life, and long storage time, lithium-ion batteries have been widely used in electric vehicles.

At present, it has been found during use that short circuits are likely to occur during battery operation, which may lead to fires and explosions under severe circumstances. Therefore, improving the operating safety of batteries remains a problem that needs to be resolved.

### SUMMARY

This application is intended to improve the operating safety of batteries.

According to a first aspect of this application, a coating apparatus is provided, including a roller capable of rotating around its axis, where the roller includes:
a body portion; and
a protrusion portion, disposed on an outer surface of the body portion and extending along an entire circumference of the body portion, where a surface of the protrusion portion located on an outermost side in a radial direction of the body portion serves as a coating surface.

Compared with a conventional plain roller, the roller in this embodiment is designed as a step roller, and an outer side wall of the body portion is provided with the protrusion portion extending along the entire circumference, thereby implementing coating using only the coating surface on the protrusion portion, implementing coating in a region with a small width through a simple structure, ensuring the width of the coated region, and reducing costs.

Moreover, during coating, a coating material adheres to the coating surface, and even when the coating material flows to a side surface of the protrusion portion, the coating material also adheres to the outer side wall of the body portion. Since a certain distance is present between the outer side wall of the body portion and the to-be-coated component, the coating material can be prevented from falling onto other regions of the to-be-coated component, thereby avoiding affecting subsequent procedures of the to-be-coated component.

In addition, in a case that a portion of the to-be-coated component located outside the coated region has been provided with another coating, the already existing coating on the to-be-coated component is not scraped away because the body portion is recessed inward with respect to the protrusion portion, thereby reducing the requirements on the sequence of the procedures in an overall coating process.

In some embodiments, the body portion is provided with a plurality of protrusion portions spaced apart along an axial direction, and the plurality of protrusion portions are configured to respectively coat a plurality of regions spaced apart on the to-be-coated component.

In these embodiments, the body portion is provided with the plurality of protrusion portions spaced apart along the axial direction, so that a coating method can be flexibly selected according to coating requirements. For example, some of the protrusion portions are selected for coating, or all the protrusion portions are simultaneously used for coating, not only meeting the coating requirements but also improving the coating efficiency.

In some embodiments, the protrusion portion is provided with a transition corner along an axial edge of the body portion.

In these embodiments, considering that during coating, when the coating material on the coating surface comes into contact with the to-be-coated component at a certain pressure, the coating material is extruded toward two axial sides of the coating surface, so that a thick coating material can accumulate at edges of the two sides. With the transition corner provided, the coating material extruded to the two sides on the coating surface can be concentrated in a region where the transition corner is located so as to prevent formation of a too thick coating layer at the edges of the two sides in a width direction, thereby allowing the coating layer to have a uniform overall thickness and enhancing the coating effect.

In some embodiments, the coating apparatus further includes a bracket and a scraper. The scraper is installed on the bracket, and the scraper is located at an outer side of the protrusion portion and configured to scrape away excessive coating material on the coating surface.

In these embodiments, the scraper is disposed at the outer side of the protrusion portion, so that excessive coating material on the protrusion portion can be scraped away by the scraper during rotation of the roller, thereby implementing uniform-thickness coating, further facilitating coating of a thin coating layer, improving thickness consistency of the coating layer during mass production, and enhancing the coating effect.

In some embodiments, a plurality of micro-grooves are distributed on the coating surface, and the scraper is in contact with the coating surface.

In these embodiments, the coating surface is provided with the micro-grooves, so that the coating material on the coating surface can fill the micro-grooves, and the coating material outside the micro-grooves on the coating surface is scraped by the scraper, thereby obtaining a thinner coating layer and ensuring the continuity and thickness uniformity of the coating layer through the coating material accumulated in the micro-grooves.

In some embodiments, a side of the scraper facing the protrusion portion is provided with a recess portion, and the protrusion portion extends into the recess portion.

In these embodiments, the coating material on a side surface of the protrusion portion can be scraped by portions of the scraper located at two sides of the protrusion portion, and under a shielding function of the portions of the scraper at the two sides of the protrusion portion, the coating material can be prevented from splashing to regions other than the coated region of the to-be-coated component under the action of a centrifugal force, to avoid affecting a subsequent process of the to-be-coated component and forming an undesired tab shape, thereby reducing the possibility of scrapping of the electrode plate.

In some embodiments, the recess portion includes a first side wall and two second side walls. The first side wall is connected between the two second side walls, the first side wall extends along the axial direction of the body portion and is configured to scrape away excessive material on the coating surface, and the two second side walls are respectively located at two axial sides of the protrusion portion.

In these embodiments, the coating material on the side surface of the protrusion portion can be scraped by the two second side walls of the scraper, and under a shielding function of the two second side walls, the coating material can be prevented from splashing to regions other than the coated region of the to-be-coated component under the action of a centrifugal force, thereby avoiding affecting a subsequent process of the to-be-coated component.

In some embodiments, the coating apparatus further includes a storage tank for accommodating coating material; the roller is located above the storage tank; the protrusion portion is configured to pick up the coating material from the storage tank during rotation of the roller; the top of the protrusion portion is configured to come into contact with the to-be-coated component; and the scraper is located at a side portion of the protrusion portion.

In these embodiments, with the storage tank provided, the coating material can be continuously provided for the roller, thereby continuously implementing coating in a long region or batch coating. Moreover, such arrangement facilitates installation of the scraper and can provide space for extension of the to-be-coated component.

In some embodiments, an axial position of the scraper along the body portion is adjustable with respect to the bracket.

In these embodiments, the scraper is adjustable in the axial position, so that the position of the scraper can be adjusted according to a position of the coated region on the to-be-coated component so as to adapt to an axial position of the protrusion portion on the body portion. Therefore, when the position of the coated region changes, only the roller needs to be replaced, and the scraper does not need to be detached and only needs to be adjusted to a position adapting to the protrusion portion, allowing the coating apparatus to flexibly adapt to different coated regions, thereby improving the coating efficiency.

In some embodiments, the scraper is provided with a first mounting hole, and the bracket includes:
a mounting base provided with a groove, where the bottom of the groove is provided with a guide groove, and the groove and the guide groove both extend along the axial direction of the body portion;
a press-fitting component, configured to press the scraper into the groove, where the press-fitting component is provided with a through groove extending along the axial direction;
a movable block, disposed outside the press-fitting component, where the movable block is provided with a second mounting hole;
and a fastener, sequentially running through the second mounting hole, the through groove, the first mounting hole, and the guide groove so as to fasten the scraper.

In these embodiments, the scraper can be installed through a simple structure, ensuring reliable fixation. Moreover, adjusting the axial position of the scraper is also easy. When the roller and the scraper need to be cleaned, the scraper is convenient to detach, implementing convenient maintenance.

According to a second aspect of this application, an electrode plate production method is provided, including: the coating apparatus in the foregoing embodiments, where the to-be-coated component serves as a current collector of an electrode plate, and the protrusion portion is configured to apply an insulating material onto a first region of the current collector passing through the roller.

In these embodiments, coating of an insulating layer in a region with a small width can be implemented through a simple structure, and width uniformity of the insulating layer can be ensured, thereby increasing the energy density of a battery cell by providing the narrow insulating layer. In addition, the insulation reliability between a first electrode plate and a second electrode plate is guaranteed, preventing short circuits, thereby improving the operating performance, reliability, and safety of the battery cell. Moreover, during coating, the insulating material also adheres to the coating surface, so that the insulating material can be prevented from falling onto a second region on the current collector where an active substance layer is applied. This prevents the insulating material falling onto the second region from protruding excessively while such excessive protrusion affects a subsequent active substance coating process, damages the current collector, or causes uneven coating of the active substance layer. An electrode plate produced in this way can have desirable operating performance.

In some embodiments, the current collector includes a plurality of first regions spaced apart along a width direction. Each first region extends along a length direction of the electrode plate. The body portion is provided with a plurality of protrusion portions spaced apart along the axial direction, and the plurality of protrusion portions are configured to respectively coat the plurality of first regions with an insulating material.

In these embodiments, the body portion is provided with the plurality of protrusion portions spaced apart along the axial direction, so that a coating method can be flexibly selected according to coating requirements. For example, some of the protrusion portions are selected for coating, or all the protrusion portions are simultaneously used to coat the current collector with an insulating layer, not only meeting the coating requirements but also improving the coating efficiency.

According to a third aspect of this application, an electrode plate production method is provided, including: making a current collector of an electrode plate pass over a roller in a coating apparatus, where the roller includes a body portion and a protrusion portion, the protrusion portion is disposed on an outer surface of the body portion and extends along an entire circumference of the body portion; and
making the roller rotate around its axis so that a first region on the current collector is coated with an insulating material through the protrusion portion.

In these embodiments, coating of an insulating layer in a region with a small width on the current collector of the electrode plate can be implemented, and width uniformity of the insulating layer is ensured, thereby increasing the energy density of a battery cell by providing the narrow insulating layer. In addition, the insulation reliability between a first electrode plate and a second electrode plate is guaranteed, preventing short circuits, thereby improving the operating performance, reliability, and safety of the battery cell. Moreover, during coating, the insulating material can be prevented from falling onto a second region on the current collector where an active substance layer is applied. This prevents the insulating material falling onto the second region from protruding excessively while such excessive protrusion affects a subsequent active substance coating process, damages the current collector, or causes uneven coating of the active substance layer. An electrode plate produced in this way can have desirable operating performance.

In some embodiments, the electrode plate production method further includes:
coating a second region on the current collector with an undercoat material before coating the first region with the insulating material, where the first region and the second region are arranged side by side in a width direction of the current collector, and the first region is located at a side close to a tab.

In these embodiments, the second region is coated with the undercoat material first, and then the first region is coated with the insulating material, allowing the insulating layer to cover an edge portion of the undercoat material. In this way, the insulating layer well docks with the subsequently applied active substance layer, improving the insulation reliability, thereby preventing short circuits between a first electrode plate and a second electrode plate in the electrode assembly.

In some embodiments, the electrode plate production method further includes:
drying the insulating material after coating the first region with the insulating material; and
coating the undercoat material with an active substance and drying the active substance.

In these embodiments, the active substance is applied after the insulating material is dried, which can prevent formation of a dotted edge during drying caused by mutual infiltration and fusion when the two materials are simultaneously applied in a wet state. This facilitates more accurate width measurement of the substance layer or insulating layer in a subsequent process.

### BRIEF DESCRIPTION OF DRAWINGS

To describe the technical solutions in the embodiments of this application more clearly, the following briefly describes the accompanying drawings required for describing the embodiments of this application. Apparently, the accompanying drawings in the following descriptions show merely some embodiments of this application, and persons of ordinary skill in the art may still derive other drawings from the accompanying drawings without creative efforts.
FIG. 1 is a schematic exploded view of a battery cell according to some embodiments of this application.
FIG. 2 is a schematic diagram of an end portion of an electrode assembly in a battery cell according to some embodiments of this application.
FIG. 3 is a schematic diagram of an unfolded first electrode plate in an electrode assembly according to some embodiments of this application.
FIG. 4 is a schematic diagram of an unfolded second electrode plate in an electrode assembly according to some embodiments of this application.
FIG. 5 is a top view of a coating apparatus according to some embodiments of this application.
FIG. 6 is a partially enlarged view of FIG. 5.
FIG. 7 is a schematic diagram of an electrode plate having a current collector coated with an insulating layer according to an embodiment.
FIG. 8 is a schematic diagram of an electrode plate having a current collector coated with an insulating layer according to another embodiment.
FIG. 9 is a top view of a scraper according to some embodiments.
FIG. 10 is a top view of a mounting base according to some embodiments.
FIG. 11 is a top view of a press-fitting component according to some embodiments.
FIG. 12 is a top view of a movable block according to some embodiments.
FIG. 13 is a schematic flowchart of an electrode plate production method according to some embodiments of this application.

### Description of reference signs:

1. roller; 11. body portion; 12. protrusion portion; T. coating surface; 121. transition corner;
2. scraper; 21. recess portion; 211. first side wall; 212. second side wall; 22. first mounting hole;
3. bracket; 31. mounting base; 311. groove; 312. guide groove; 32. press-fitting component; 321. through groove; 33. movable block; 331. second mounting hole; 34. fastener;
4. storage tank;
10. electrode assembly; 10A. straight section; 10B. turning section; 101. first electrode plate; 102. second electrode plate; 1011. current collector; 1011A. body portion; 1011B. tab; 1012. coating layer; 1012A. active substance layer; 1012B. insulating layer; S1. first region; S2. second region; 103. separator;
100. battery cell; 20. housing body; 30. adapter; 40. end cover assembly; 401. end cover body; and 402. electrode terminal.

### DESCRIPTION OF EMBODIMENTS

Although this application has been described with reference to the preferred embodiments, various modifications to this application and replacements of the components therein with equivalents can be made without departing from the scope of this application. In particular, as long as there is no structural conflict, the various technical features mentioned in the embodiments can be combined in any manner. This application is not limited to the specific embodiments disclosed in this specification but includes all technical solutions falling in the scope of the claims.

The following further describes the embodiments of this application in detail with reference to the accompanying drawings and examples. The detailed description of the embodiments and the accompanying drawings are intended to illustrate the principle of this application, rather than to limit the scope of this application, meaning this application is not limited to the embodiments described herein.

In the description of the embodiments of this application, the term "a plurality of" means more than two (inclusive). Similarly, "a plurality of groups" means more than two (inclusive) groups, and "a plurality of pieces" means more than two (inclusive) pieces.

This application uses the descriptions of the orientations or positional relationships indicated by "upper", "lower", "top", "bottom", "front", "rear", "inside", "outside", and the like, which are merely for ease of description of this application rather than indicating or implying that the apparatus mentioned must have specific orientations or must be constructed or manipulated according to specific orientations. These terms shall therefore not be construed as any limitations on the protection scope of this application.

In addition, the terms "first", "second", "third", and the like are merely for the purpose of description and shall not be understood as any indication or implication of relative importance. "Perpendicular" is not perpendicular in the strict sense but within an allowable range of error. "Parallel" is not parallel in the strict sense but within an allowable range of error. The orientation terms appearing in the following description all are directions shown in the figures, and do not limit the specific structure of the application.

In the description of this application, it should also be noted that unless otherwise specified and defined explicitly, the terms "mounting", "connection", and "join" should be understood in their general senses. For example, they may refer to a fixed connection, a detachable connection, or an integral connection, and may refer to a direct connection or an indirect connection via an intermediate medium. Persons of ordinary skill in the art can understand specific meanings of these terms in this application as appropriate to specific situations.

In this specification, reference to "embodiment" means that specific features, structures, or characteristics described with reference to the embodiment may be incorporated in at least some embodiments of this application. The word "embodiment" appearing in various places in the specification does not necessarily refer to the same embodiment or an independent or alternative embodiment that is exclusive of other embodiments. It is explicitly or implicitly understood by persons skilled in the art that the embodiments described herein may be combined with other embodiments.

The battery mentioned in the embodiments of this application is a single physical module that includes multiple battery cells for providing a higher voltage and capacity. For example, the battery mentioned in this application may include a battery module, a battery pack, or the like.

The battery cell may include a lithium-ion battery cell, a lithium-sulfur battery cell, a sodium-lithium-ion battery cell, a sodium-ion battery cell, a magnesium-ion battery cell, or the like. This is not limited in the embodiments of this application. The battery cell may be cylindrical, flat, cuboid, or of other shapes, which is not limited in the embodiments of this application either. Battery cells are typically divided into three types by packaging method: cylindrical cell, prismatic cell, and pouch cell. This is not limited in the embodiments of this application either.

An existing battery cell generally includes a housing body and an electrode assembly accommodated in the housing body, with the housing body filled with an electrolyte. The electrode assembly is mainly formed by a first electrode plate and a second electrode plate with opposite polarities through stacking or winding, and an insulator such as a separator is typically provided between the first electrode plate and the second electrode plate. Parts of the first electrode plate and the second electrode plate that are coated with active substances constitute a body portion of the electrode assembly, while parts of the first electrode plate and the second electrode plate that are coated with no active substances constitute a first tab and a second tab respectively. In a lithium-ion battery, the first electrode plate may be a positive electrode plate including a positive electrode current collector and positive electrode active substance layers provided on two sides of the positive electrode current collector, where the positive electrode current collector may be made of, for example, aluminum, and the positive electrode active substance may be, for example, lithium cobaltate, lithium iron phosphate, ternary lithium, or lithium manganate; and the second electrode plate may be a negative electrode plate including a negative electrode current collector and negative electrode active substance layers provided on two sides of the negative electrode current collector, where the negative electrode current collector may be made of, for example, copper, and the negative electrode active substance may be, for example, graphite or silicon. Optionally, the first electrode plate may alternatively be a negative electrode plate, and correspondingly, the second electrode plate is a positive electrode plate. The first tab and the second tab may both be located on one end of the body portion or be located on two ends of the body portion respectively. During charging and discharging of the battery cell, the positive electrode active substance and the negative electrode active substance react with the electrolyte, and the tabs are connected to terminals to form a current loop.

To describe improved concept of this application more clearly, the battery cell and the electrode assembly therein are described in detail first.

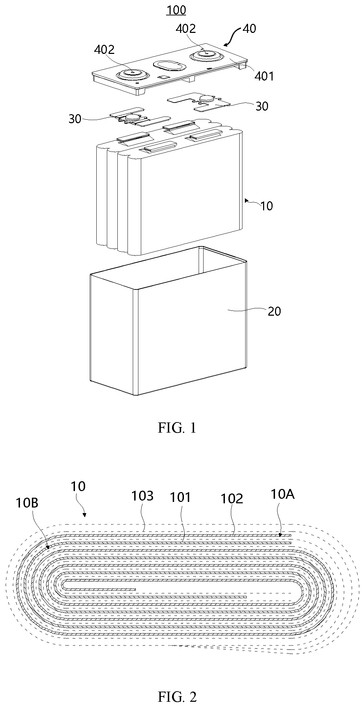

In some embodiments, as shown in FIG. 1, the battery cell 100 includes a housing body 20, an electrode assembly 10, an end cover assembly 40, and two adapters 30. The housing body 20 includes an opening. The end cover assembly 40 seals the opening and is connected to the housing body 20 to form a housing of the battery cell 100. The electrode assembly 10 is disposed in the housing body 20, and the housing body 20 is filled with the electrolyte. One or more electrode assemblies 10 may be provided according to actual use requirements. The end cover assembly 40 may include an end cover body 401 and two electrode terminals 402 with opposite polarities. A positive tab and a negative tab led out by the electrode assembly 10 are respectively connected to two electrode terminals 402 via one adapter 30.

FIG. 2 is a schematic structural diagram of an end portion of a wound electrode assembly. The electrode assembly 10 is formed by a first electrode plate 101 and a second electrode plate 102 with opposite polarities through winding, and a separator 103 is typically provided between the first electrode plate 101 and the second electrode plate 102. For example, the electrode assembly 10 is flat and has two parallel straight sections 10A opposite each other and two turning sections 10B opposite each other, and the turning sections 10B are connected to a same end of the two straight sections 10A. Optionally, the electrode assembly 10 may alternatively be cylindrical.

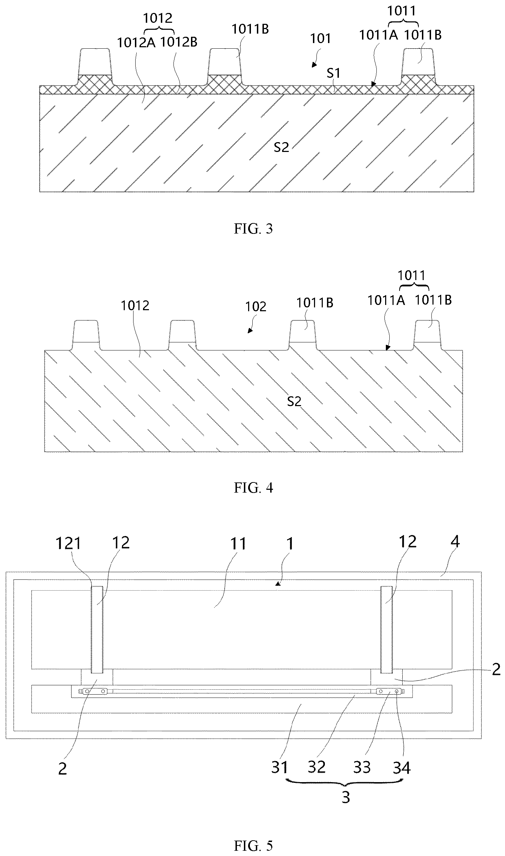

As shown in FIG. 3 and FIG. 4, the first electrode plate 101 and the second electrode plate 102 each include a current collector 1011. The current collector 1011 may include a body portion 1011A and a tab 1011B, where the tab 1011B protrudes outward from an end face of the body portion 1011A in a width direction. A coating layer 1012 is provided on a side surface of the current collector 1011. The coating layer 1012 may be provided on both sides of the current collector 1011. For an innermost or outermost electrode plate, the coating layer 1012 may be provided on only one side of the current collector 1011.

The inventors have found in practice that battery safety is affected by many factors, an influence factor difficult to discover is that burrs are likely to occur at edge positions of the first electrode plate 101 and the second electrode plate 102 during production. Burrs are especially likely to occur at an edge of a die-cut tab, while a coating width of an active substance on the negative electrode plate is generally greater than that of an active substance on the positive electrode plate, so that a coated region of the negative electrode plate where the active substance is applied is closer to a die-cut position of a tab of the positive electrode plate. Therefore, sharp burrs pierce the separator, causing contact-travel short circuits between the first electrode plate 101 and the second electrode plate 102, and even causing fires and explosions in severe cases.

To avoid influence of burrs, the inventors came up with an idea of coating an edge region of the current collector of the positive electrode plate close to the tab with an insulating material such as a tab adhesive so as to cover burrs produced in an region on the current collector close to the tab, and a specific coating position is as follows.

FIG. 3 is a schematic structural diagram of the first electrode plate 101, for example, the first electrode plate 101 is a positive electrode plate. The current collector 1011 may be made of aluminum. The coating layer 1012 may include an active substance layer 1012A and an insulating layer 1012B arranged side by side in a width direction of the first electrode plate 101. The active substance layer 1012A is applied onto a second region S2 on the current collector 1011, and the insulating layer 1012B is applied onto a first region S1 on the current collector 1011. The insulating layer 1012B is located at a side of the active substance layer 1012A close to a tab 1011B in the width direction of the first electrode plate 101. The active substance layer 1012A may be made of lithium cobaltate, lithium iron phosphate, ternary lithium, or lithium manganate.

FIG. 4 is a schematic structural diagram of the second electrode plate 102 according to some embodiments. For example, the second electrode plate 102 is a negative electrode plate. The current collector 1011 may be made of copper, and the coating layer 1012 is a negative electrode active substance and may be graphite or silicon. A coating region for the coating layer 1012 in a width direction of the second electrode plate 102 exceeds an edge of the body portion 1011A, covering a root portion of the tab 1011B.

In such a manner, the insulating layer 1012B is provided, and an end portion of the body portion 1011A of the negative electrode plate close to the tab 1011B in the width direction is located in a region where the insulating layer 1012B is located. This can reduce the risk of short circuits between the first electrode plate 101 and the second electrode plate 102 caused by burrs or metal scraps piercing the separator 103 while allowing the active substance layer 1012A of the negative electrode to exceed the active substance layer 1012A of the adjacent positive electrode in the width direction. Optionally, when the second electrode plate 102 is a negative electrode plate, since the coating layers 1012 applied onto two side surfaces are different in weight, the insulating layer 1012B may be provided for distinguishing between front and rear surfaces of the second electrode plate 102.

Based on the foregoing electrode plate arrangement manner, to reduce influence of the provision of the insulating layer 1012B on the energy density of the battery, width of the insulating layer 1012B needs to be minimized. However, it is difficult to implement coating in narrow regions by using the existing processes and techniques. Therefore, this application needs to provide a coating apparatus capable of implementing coating in narrow regions. Moreover, during coating, it is necessary to prevent a coating material from adhering to a second region S2 where an active substance layer 1012A is located as far as possible, so as to guarantee the operating performance of an electrode assembly 10.

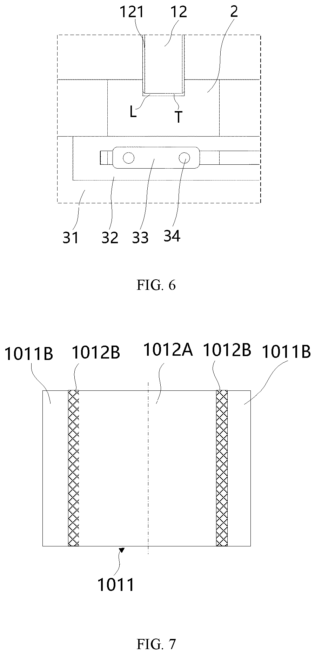

Based on the foregoing improvement idea, this application provides a coating apparatus. As shown in FIG. 5 and FIG. 6, in some embodiments, the coating apparatus includes a roller 1 capable of rotating around its axis. The roller 1 includes a body portion 11 and a protrusion portion 12. The protrusion portion 12 is disposed on an outer surface of the body portion 11 and extends along an entire circumference of the body portion 11. A surface of the protrusion portion 12 located on an outermost side in a radial direction of the body portion 11 serves as a coating surface T.

The roller 1 is rotatably installed on a fixed base, and a first drive component may be installed on the fixed base to drive the roller 1 to rotate. The roller 1 may be a micro-gravure roller, to be specific, a plurality of micro-grooves are distributed on the coating surface T. For uniformity of coating, the micro-grooves may be densely distributed on the entire coating surface T. The plurality of micro-grooves may form a mesh shape or a honeycomb shape, or the coating surface T may be a smooth surface. Optionally, the body portion 11 is columnar, for example, cylindrical or prismatic.

The protrusion portion 12 may be a circular lug boss and forms a step structure with respect to the outer surface of the body portion 11. A cross section of the protrusion portion 12 may be rectangular, trapezoidal, or the like. One or more protrusion portions 12 may be provided according to the number of coated regions. For example, a radial height of the protrusion portion 12 may be 10 mm to 20 mm, and an axial width may be 5 mm to 20 mm. An outermost surface of the protrusion portion 12 in a radial direction of the body portion 11 serves as the coating surface T. The coating surface T may be a cylindrical surface. The coating surface T is configured to coat a to-be-coated component during rotation of the roller 1. A size of the coating surface T in an axial direction of the roller 1 is the same as a width of a coated region on the to-be-coated component.

During coating, the to-be-coated component moves along a direction tangent to the roller 1, allowing the protrusion portion 12 to pick up coating material and driving the roller 1 to rotate continuously, such that the coating material on the protrusion portion 12 is applied onto the to-be-coated component, and the coated region forms a long strip shape.

For example, the to-be-coated component is a current collector 1011 of an electrode plate, and the coating material is an insulating material. A first region S1 on the current collector 1011 may be coated with the insulating material to obtain an insulating layer 1012B. The insulating material may be commonly referred to as tab adhesive. Besides, the coating apparatus may also be applied to any other fields requiring a preset width of coating, especially for implementing coating in a region with a small width.

Compared with a conventional plain roller, the roller 1 in these embodiment is designed as a step roller, and an outer side wall of the body portion 11 is provided with the protrusion portion 12 extending along the entire circumference, thereby implementing coating using only the coating surface T on the protrusion portion 12, implementing coating in a region with a small width through a simple structure, ensuring the width of the coated region, and reducing costs.

Moreover, during coating, the coating material adheres to the coating surface T, and even when the coating material flows to a side surface of the protrusion portion 12, the coating material also adheres to the outer side wall of the body portion 11. Since a certain distance is present between the outer side wall of the body portion 11 and the to-be-coated component, the coating material can be prevented from falling onto other regions of the to-be-coated component, thereby avoiding affecting subsequent procedures of the to-be-coated component.

In addition, in a case that a portion of the to-be-coated component located outside the coated region has been provided with another coating, the already existing coating on the to-be-coated component is not scraped away because the body portion 11 is recessed inward with respect to the protrusion portion 12, thereby reducing the requirements on the sequence of the procedures in an overall coating process.

For example, when the coating apparatus is configured to coat the first region S1 on the current collector 1011 of the electrode plate to obtain the insulating layer 1012B, coating of the insulating layer 1012B in a region with a small width can be implemented through a simple structure, and width uniformity of the insulating layer 1012B can be ensured, thereby increasing the energy density of the battery cell 100 by providing the narrow insulating layer 1012B. In addition, the insulation reliability between the first electrode plate 101 and the second electrode plate 102 is guaranteed, preventing short circuits, thereby improving the operating performance, reliability, and safety of the battery cell 100. Moreover, during coating, the insulating material also adheres to the coating surface T, so that the insulating material can be prevented from falling onto a second region S2 on the current collector 1011 where an active substance layer 1012A is applied. This prevents the insulating material falling onto the second region S2 from protruding excessively while such excessive protrusion affects a subsequent active substance coating process, damages the current collector 1011, or causes uneven coating of the active substance layer 1012A. An electrode plate produced in this way can have desirable operating performance.

In some embodiments, the body portion 11 is provided with a plurality of protrusion portions 12 spaced apart along an axial direction, and the plurality of protrusion portions 12 are configured to respectively coat a plurality of regions spaced apart on the to-be-coated component.

If a plurality of to-be-coated regions are spaced apart on the to-be-coated component, the plurality of protrusion portions 12 are spaced apart on the body portion 11. During actual use, the coating material adheres to only some of the protrusion portions 12 so as to implement coating in some to-be-coated regions, and the plurality of to-be-coated regions can be coated in batches. Alternatively, the coating material adheres to all the plurality of protrusion portions 12 so as to implement simultaneous coating in the plurality of to-be-coated regions. According to the width of the coated region, the plurality of protrusion portions 12 may be the same or different in axial size. To implement simultaneous coating in the plurality of protrusion portions 12, the plurality of protrusion portions 12 may be the same in circumferential size.

In FIG. 5, two protrusion portions 12 are respectively disposed in regions of the body portion 11 close to two ends in the axial direction. For example, the to-be-coated component is the current collector 1011 of the electrode plate. As shown in FIG. 7, two insulating layers 1012B may be applied in a spaced manner on the current collector 1011 made of a foil material, and then an active substance layer 1012A is applied between the two insulating layers 1012B. Uncoated regions at two outermost sides serve as the tab 1011B. Ultimately, a region where the active substance layer 1012A is located is cut along a dotted line to obtain two electrode plates, and the tab 1011B is subjected to die cutting, or a continuous tab 1011B is retained. Such structure can improve the coating efficiency of the insulating layer 1012B, thereby improving the production efficiency of the electrode plate.

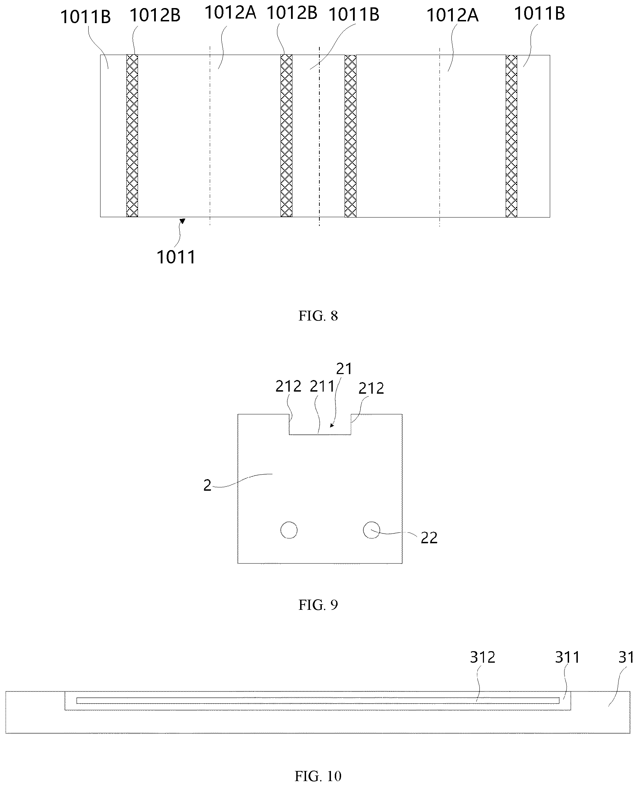

Optionally, four protrusion portions 12 are spaced apart in the axial direction of the body portion 11. For example, the to-be-coated component is the current collector 1011 of the electrode plate. As shown in FIG. 8, four insulating layers 1012B may be applied in a spaced manner on the current collector 1011 made of a foil material, and then an active substance layer 1012A is applied between the two insulating layers 1012B at the outermost sides to obtain two active substance layers 1012A that are applied, and the remaining uncoated regions serve as the tab 1011B. Ultimately, a region where the active substance layer 1012A is located and a region of a middle tab 1011B are cut along dotted lines to obtain four electrode plates, and the tab 1011B is subjected to die cutting, or a continuous tab 1011B is retained.

In these embodiments, the body portion 11 is provided with the plurality of protrusion portions 12 spaced apart along the axial direction, so that a coating method can be flexibly selected according to coating requirements. For example, some of the protrusion portions 12 are selected for coating, or all the protrusion portions 12 are simultaneously used for coating, not only meeting the coating requirements but also improving the coating efficiency.

In some embodiments, as shown in FIG. 6, the protrusion portion 12 is provided with a transition corner 121 along an axial edge of the body portion 11.

For example, the transition corner 121 may be a chamfer or rounded corner. For example, the chamfer is 0.5 mm×45° to 3 mm×45°.

In these embodiments, considering that during coating, when the coating material on the coating surface T comes into contact with the to-be-coated component at a certain pressure, the coating material is extruded toward two axial sides of the coating surface T, so that a thick coating material can accumulate at edges of the two sides. With the transition corner 121 provided, the coating material extruded to the two sides on the coating surface T can be concentrated in a region where the transition corner 121 is located so as to prevent formation of a too thick coating layer at the edges of the two sides in a width direction, thereby allowing the coating layer to have a uniform overall thickness and enhancing the coating effect.

In some embodiments, as shown in FIG. 5 and FIG. 6, the coating apparatus further includes a bracket 3 and a scraper 2. The scraper 2 is installed on the bracket 3, and the scraper 2 is located at an outer side of the protrusion portion 12 and configured to scrape away excessive coating material on the coating surface T.

Position of the scraper 2 is adjustable in a radial direction of the roller 1. The scraper 2 and the coating surface T may be adjusted to have a gap L therebetween according to a thickness of the coating layer. Each protrusion portion 12 may be correspondingly provided with one scraper 2. When a plurality of protrusion portions 12 are provided, a preset gap L between the scraper 2 and the corresponding protrusion portion 12 is adjusted for applying coating layers with different thicknesses, or each scraper 2 and the corresponding protrusion portion 12 are provided with a same preset gap L. When a plurality of protrusion portions 12 are provided, the plurality of protrusion portions 12 may be installed on one bracket 3. In a case of no interference with other components, the scraper 2 may be located at any circumferential angle at an outer side of the protrusion portion 12.

In these embodiments, the scraper 2 is disposed at the outer side of the protrusion portion 12, so that excessive coating material on the protrusion portion 12 can be scraped away by the scraper 2 during rotation of the roller 1, thereby implementing uniform-thickness coating, further facilitating coating of a thin coating layer such as a coating layer with a thickness of 2 um to 20 um, improving thickness consistency of the coating layer during mass production, and enhancing the coating effect.

In some embodiments, a plurality of micro-grooves are distributed on the coating surface T, and the scraper 2 is in contact with the coating surface T.

For uniformity of coating, the micro-grooves may be densely distributed on the entire coating surface T. The plurality of micro-grooves may form a mesh shape or a honeycomb shape. During coating, the scraper 2 may be in contact with the coating surface T and can scrape away the coating material outside the micro-grooves on the coating surface T without affecting the rotation of the roller 1, thereby obtaining a thinner coating layer. Optionally, a preset gap L may be maintained between the scraper 2 and the coating surface T.

In these embodiments, the coating surface T is provided with the micro-grooves, so that the coating material on the coating surface T can fill the micro-grooves, and the coating material outside the micro-grooves on the coating surface T is scraped by the scraper 2, thereby obtaining a thinner coating layer and ensuring the continuity and thickness uniformity of the coating layer through the coating material accumulated in the micro-grooves.

In some embodiments, as shown in FIG. 9, a side of the scraper 2 facing the protrusion portion 12 is provided with a recess portion 21, and the protrusion portion 12 extends into the recess portion 21.

Optionally, the shape of the recess portion 21 may match the shape of the protrusion portion 12, and a profile size of the recess portion 21 may be larger than that of the protrusion portion 12, so that the protrusion portion 12 can rotate freely in a space formed by the recess portion 21.

Optionally, the recess portion 21 may be disposed close to an axial side surface of the protrusion portion 12 and has a small gap, so that a material on the side surface of the protrusion portion 12 can be scraped away better without affecting the rotation of the roller 1.

Optionally, portions of the scraper 2 located at two sides of the recess portion 21 can extend to an outer side wall of the body portion 11 along a radial direction and have a small gap, thereby preventing a material on the coating surface T from splashing to the two sides as far as possible and scraping away the material on the side surface of the protrusion portion 12 in a larger radial range, without affecting the rotation of the roller 1.

A preset gap L may be present between the recess portion 21 and the coating surface T, or the recess portion 21 may be in contact with the coating surface T in a case that the coating surface T is provided with micro-grooves.

In these embodiments, the coating material on the side surface of the protrusion portion 12 can be scraped away by the portions of the scraper 2 located at the two sides of the protrusion portion 12, and under a shielding function of the portions of the scraper 2 at the two sides of the protrusion portion 12, the coating material can be prevented from splashing to regions other than the coated region of the to-be-coated component under the action of a centrifugal force, to avoid affecting a subsequent process of the to-be-coated component and forming an undesired tab shape, thereby reducing the possibility of scrapping of the electrode plate.

For example, when the coating apparatus is configured to coat the first region S1 on the current collector 1011 of the electrode plate to obtain the insulating layer 1012B, during coating, the insulating material can be prevented from splashing onto a second region S2 on the current collector 1011 where an active substance layer 1012A is applied. This prevents the insulating material splashing onto the second region S2 affecting a subsequent active substance coating process, damaging the current collector 1011, or causing uneven coating of the active substance layer 1012A. An electrode plate produced in this way can have desirable operating performance.

In some embodiments, as shown in FIG. 9, the recess portion 21 includes a first side wall 211 and two second side walls 212. The first side wall 211 is connected between the two second side walls 212, the first side wall 211 extends along the axial direction of the body portion 11 and is configured to scrape away excessive coating material on the coating surface T, and the two second side walls 212 are respectively located at two axial sides of the protrusion portion 12.

The recess portion 21 may be rectangular and may be provided with an opening in a side facing the roller 1. Correspondingly, a cross section of the protrusion portion 12 may also be rectangular.

Optionally, the two second side walls 212 may be respectively disposed close to two axial side surfaces of the protrusion portion 12 and a small gap is present between the second side wall 212 and the side surface of the protrusion portion 12, so that the material on the side surface of the protrusion portion 12 can be scraped away better without affecting the rotation of the roller 1.

Optionally, portions of the scraper 2 located at outer sides of the two second side walls 212 can extend to an outer side wall of the body portion 11 along a radial direction and have a gap, thereby preventing the material on the coating surface T from splashing to the two sides as far as possible and scraping away the material on the side surface of the protrusion portion 12 in a larger radial range, without affecting the rotation of the roller 1.

Optionally, a preset gap L may be present between the first side wall 211 and the coating surface T, or the recess portion 21 may be in contact with the coating surface T in a case that the coating surface T is provided with micro-grooves.

In these embodiments, the coating material on the side surface of the protrusion portion 12 can be scraped by the two second side walls 212 of the scraper 2, and under a shielding function of the two second side walls 212, the coating material can be prevented from splashing to regions other than the coated region of the to-be-coated component under the action of a centrifugal force, thereby avoiding affecting a subsequent process of the to-be-coated component.

In some embodiments, as shown in FIG. 5, the coating apparatus further includes a storage tank 4 for accommodating coating material; the roller 1 is located above the storage tank 4; the protrusion portion 12 is configured to pick up the coating material from the storage tank 4 during rotation of the roller 1; the top of the protrusion portion 12 is configured to come into contact with the to-be-coated component; and the scraper 2 is located at a side portion of the protrusion portion 12.

The storage tank 4 is located below the roller 1. A liquid level of the coating material in the storage tank 4 should be higher than the lowest portion of the coating surface T and lower than the lowest portion of an outer side wall of the body portion 11. The storage tank 4 is disposed below the roller 1. Therefore, the to-be-coated component can extend above the roller 1, coating is implemented when the top of the protrusion portion 12 is in contact with the to-be-coated component, and the scraper 2 may be located at the side portion of the protrusion portion 12 so as to facilitate arrangement of the bracket 3 and the scraper 2.

In these embodiments, with the storage tank 4 provided, the coating material can be continuously provided for the roller 1, thereby continuously implementing coating in a long region or batch coating. Moreover, such arrangement facilitates installation of the scraper 2 and can provide space for extension of the to-be-coated component.

In some embodiments, the axial position of the scraper 2 along the body portion 11 is adjustable with respect to the bracket 3.

Optionally, the coating apparatus may further include a second drive component for driving adjustment of the axial position of the scraper 2. For example, the second drive component may be a cylinder, an electric push rod, or a linear motor.

In these embodiments, the scraper 2 is adjustable in the axial position, so that the position of the scraper 2 can be adjusted according to a position of the coated region on the to-be-coated component so as to adapt to an axial position of the protrusion portion 12 on the body portion 11. Therefore, when the position of the coated region changes, only the roller 1 needs to be replaced, and the scraper 2 does not need to be detached and only needs to be adjusted to a position adapting to the protrusion portion 12, allowing the coating apparatus to flexibly adapt to different coated regions, thereby improving the coating efficiency.

In some embodiments, as shown in FIG. 5 and FIG. 9 to FIG. 12, the scraper 2 is provided with a first mounting hole 22; and the bracket 3 includes a mounting base 31 provided with a groove 311, where the bottom of the groove 311 is provided with a guide groove 312, and the groove 311 and the guide groove 312 both extend along the axial direction of the body portion 11; a press-fitting component 32 configured to press the scraper 2 into the groove 311, where the press-fitting component 32 is provided with a through groove 321 extending along the axial direction; a movable block 33 disposed outside the press-fitting component 32, where the movable block 33 is provided with a second mounting hole 331; and a fastener 34 that sequentially runs through the second mounting hole 331, the through groove 321, the first mounting hole 22, and the guide groove 312 so as to fasten the scraper 2.

As shown in FIG. 10, the mounting base 31 may be a lathy rectangular structure, which has the same length as the roller 1, so as to realize adjustment in a larger range in the axial direction and adapt to the protrusion portions 12 disposed at different axial positions of the body portion 11, thereby adapting to to-be-coated components with different coated regions. The mounting base 31 is provided with the groove 311, and the groove 311 can extend along a length direction of the mounting base 31. For example, the groove 311 may be provided at a region of a top surface of the mounting base 31 close to the roller 1, a bottom surface of the groove 311 is provided with the guide groove 312, the guide groove 312 may extend along the length direction of the mounting base 31, and the guide groove 312 has a smaller width than the groove 311.

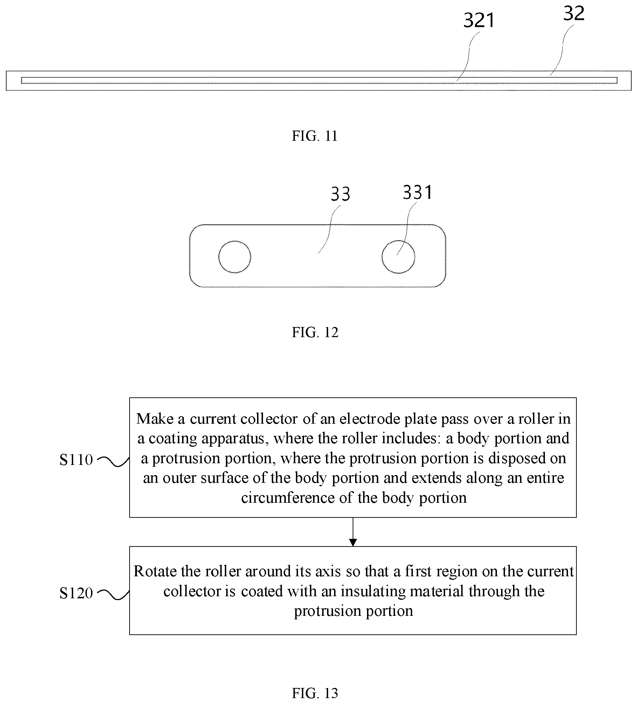

As shown in FIG. 11, the press-fitting component 32 is configured to press the scraper 2 into the groove 311. The press-fitting component 32 may be a plate structure which is entirely disposed in the groove 311. The press-fitting component 32 is provided with the through groove 321 extending along the axial direction, and the through groove 321 has the same length as the guide groove 312.

As shown in FIG. 12, the number of the movable blocks 33 is the same as the number of the scrapers 2, and each movable block 33 is configured to adjust the axial position of the corresponding scraper 2. The movable block 33 is disposed outside the press-fitting component 32.

To implement fastening of the scraper 2, as shown in FIG. 9 and FIG. 12, the scraper 2 may be provided with two first mounting holes 22 spaced apart in the axial direction of the roller 1; the movable block 33 may be provided with two second mounting holes 331 spaced apart, so that the scraper 2 can be fastened via two fasteners; and by loosening the fasteners, the position of the scraper 2 can be adjusted. Optionally, there may be one first mounting hole 22 and one second mounting hole 331.

In these embodiments, the scraper 2 can be installed through a simple structure, ensuring reliable fixation. Moreover, adjustment of the axial position of the scraper 2 is also facilitated. When the roller 1 and the scraper 2 need to be cleaned, the scraper 2 is convenient to detach, implementing convenient maintenance.

In addition, this application provides an electrode plate production system including the coating apparatus in the foregoing embodiments. As shown in FIG. 3, the to-be-coated component serves as a current collector 1011 of an electrode plate, and the protrusion portion 12 is configured to apply an insulating material onto a first region S1 of the current collector 1011 passing through the roller 1.

The insulating material is commonly referred to as a tab adhesive. When coating is required, the current collector 1011 continuously moves over the roller 1 by maintaining tangency with the roller 1 and drives the roller 1 to rotate, so that the insulating material is applied onto the first region S1 through the coating surface T, and after drying, a thin lathy insulating layer 1012B is formed in a region close to a tab 1011B.

In these embodiments, coating of the insulating layer 1012B in a region with a small width can be implemented through a simple structure, and width uniformity of the insulating layer 1012B can be ensured, increasing the energy density of a battery cell 100 by providing the narrow insulating layer 1012B. In addition, and the insulation reliability between a first electrode plate 101 and a second electrode plate 102 can be ensured, preventing short circuits, thereby improving the operating performance, reliability, and safety of the battery cell 100. Moreover, during coating, the insulating material also adheres to the coating surface T, so that the insulating material can be prevented from falling onto a second region S2 on the current collector 1011 where an active substance layer 1012A is applied. This prevents the insulating material falling onto the second region S2 from protruding excessively while such excessive protrusion affects a subsequent active substance coating process, damages the current collector 1011, or causes uneven coating of the active substance layer 1012A. An electrode plate produced in this way can have desirable operating performance.

In some embodiments, the current collector 1011 includes a plurality of first regions S1 spaced apart along a width direction. Each first region S1 extends along a length direction of the electrode plate. The body portion 11 is provided with a plurality of protrusion portions 12 spaced apart along the axial direction, and the plurality of protrusion portions 12 are configured to respectively coat the plurality of first regions S1 with an insulating material.

If a plurality of first regions S1 are spaced apart on the current collector 1011, the plurality of protrusion portions 12 are spaced apart on the body portion 11. During actual use, the coating material adheres to only some of the protrusion portions 12 so as to implement coating in some first regions S1, and the plurality of first regions S1 can be coated in batches. Alternatively, the coating material adheres to all the plurality of protrusion portions 12 so as to implement simultaneous coating in the plurality of first regions S1. According to the width of the first region S1, the plurality of protrusion portions 12 may be the same or different in axial size. To implement simultaneous coating in the plurality of protrusion portions 12, the plurality of protrusion portions 12 may be the same in circumferential size.

FIG. 7 and FIG. 8 respectively show a case in which the current collector 1011 is coated with two insulating layers 1012B and a case in which the current collector 1011 is coated with four insulating layers 1012B. A specific coating method has been described in the foregoing embodiments, which is not described herein again.

In these embodiments, the body portion 11 is provided with the plurality of protrusion portions 12 spaced apart along the axial direction, so that a coating method can be flexibly selected according to coating requirements. For example, some of the protrusion portions 12 are selected for coating, or all the protrusion portions 12 are simultaneously used to coat the current collector 1011 with the insulating layer 1012B, not only meeting the coating requirements but also improving the coating efficiency.

The following uses FIG. 5 to FIG. 7 as an example to describe a method for coating the current collector 1011 of the electrode plate with the insulating layer 1012B by using the coating apparatus of this application. As shown in FIG. 7, to improve the coating efficiency of the insulating layer 1012B, a current collector 1011 made of a foil material may be coated with two insulating layers 1012B. A specific method is as follows.
1. Apply an undercoat material onto a region between the two insulating layers 1012B and dry it.
2. As shown in FIG. 5, select and install a roller 1 with two protrusion portions 12 spaced apart to match a distance between the two insulating layers 1012B, then loosen the fastener to move the movable block 33 to align the axial position of the scraper 2 with the protrusion portion 12, ensuring that the protrusion portion 12 extends into the recess portion 21; and maintain an appropriate preset gap between the coating surface T and the first side wall 211 according to a thickness of the insulating layer 1012B that needs to be applied. After adjustment is completed, tighten the fastener to fasten the scraper 2.
3. Make the current collector 1011 pass over the top of the roller 1 and make contact with the roller 1, keeping the current collector 1011 moving while the roller 1 rotates. In this case, the coating surface T picks up an insulating material from the storage tank 4 and applies the insulating material onto the first region S1 as the roller 1 rotates. After the entire electrode plate is coated, drying is performed to obtain two insulating layers 1012B.
4. Apply active substance between the two insulating layers 1012B and dry it to obtain an active substance layer 1012A.
5. Perform cutting along a dotted line in a region where the active substance layer 1012A is located to obtain two electrode plates. A tab 1011B is subjected to die cutting as required, or a continuous tab 1011B is retained.

Ultimately, this application provides an electrode plate production method. In some embodiments, the electrode plate production method includes the following steps.

S110. Make a current collector 1011 of an electrode plate pass over a roller 1 in a coating apparatus, where the roller 1 includes: a body portion 11 and a protrusion portion 12, where the protrusion portion 12 is disposed on an outer surface of the body portion 11 and extends along an entire circumference of the body portion 11.

S120. Rotate the roller 1 around its axis so that a first region S1 on the current collector 1011 is coated with an insulating material through the protrusion portion 12.

S110 and S120 are implemented in sequence. During coating, the current collector 1011 can continuously move along its extension direction.

In these embodiments, coating of the insulating layer 1012B in a region with a small width on the current collector 1011 of the electrode plate can implemented, and width uniformity of the insulating layer 1012B can be ensured, increasing the energy density of a battery cell 100 by providing the narrow insulating layer 1012B. In addition, the insulation reliability between a first electrode plate 101 and a second electrode plate 102 is ensured, preventing short circuits, thereby improving the operating performance, reliability, and safety of the battery cell 100. Moreover, during coating, the insulating material can be prevented from falling onto a second region S2 on the current collector 1011 where an active substance layer 1012A is applied, thereby preventing the insulating material falling onto the second region S2 from protruding excessively, while such excessive protrusion affects a subsequent active substance coating process, damages the current collector 1011, or causes uneven coating of the active substance layer 1012A. An electrode plate produced in this way can have desirable operating performance.

In some embodiments, the electrode plate production method further includes the following step:
coat a second region S2 on the current collector 1011 with an undercoat material before coating the first region S1 with the insulating material, where the first region S1 and the second region S2 are arranged side by side in a width direction of the current collector 1011, and the first region S1 is located at a side close to a tab 1011B.

Before the insulating material is coated, the undercoat material is applied onto the second region S2 first, so that the undercoat material is subsequently coated with an active substance. After the undercoat material is dried, the first region S1 is subsequently coated with the insulating material, and after coating is completed, drying is performed, for example, natural drying or heating drying. After drying, an insulating layer 1012B is formed.

In these embodiments, the second region S2 is coated with the undercoat material first, and then the first region S1 is coated with the insulating material, allowing the insulating layer 1012B to cover an edge portion of the undercoat material. In this way, the insulating layer 1012B well docks with the subsequently applied active substance layer 1012A, improving the insulation reliability, thereby preventing short circuits between the first electrode plate 101 and the second electrode plate 102 in the electrode assembly 10.

In some embodiments, the electrode plate production method further includes the following steps:
dry the insulating material after the first region S1 is coated with the insulating material; and
coat the undercoat material with an active substance and dry the active substance.

After the insulating material of the first region S1 is dried, the insulating layer 1012B is formed, then the undercoat material is coated with the active substance, and ultimately the active substance is dried to obtain the active substance layer 1012A.

In these embodiments, the active substance is applied after the insulating material is dried, which can prevent formation of a dotted edge during drying caused by mutual infiltration and fusion when the two materials are simultaneously applied in a wet state, thereby facilitating more accurate width measurement of the substance layer 1012A or insulating layer 1012B in a subsequent process.

Although this application has been described with reference to the preferred embodiments, various modifications to this application and replacements of the components therein with equivalents can be made without departing from the scope of this application. In particular, as long as there is no structural conflict, the various technical features mentioned in the embodiments can be combined in any manner. This application is not limited to the specific embodiments disclosed in this specification but includes all technical solutions falling in the scope of the claims.

## Claims

1. A coating apparatus, comprising a roller (1) capable of rotating around its axis, wherein the roller (1) comprises:
a body portion (11); and
a protrusion portion (12), disposed on an outer surface of the body portion (11) and extending along an entire circumference of the body portion (11), wherein a surface of the protrusion portion (12) located on an outermost side in a radial direction of the body portion (11) serves as a coating surface (T).

2. The coating apparatus according to claim 1, wherein a plurality of protrusion portions (12) are spaced apart along an axial direction of the body portion (11) , and the plurality of protrusion portions (12) are configured to respectively coat a plurality of regions spaced apart on a to-be-coated component.

3. The coating apparatus according to claim 1 or 2, wherein the protrusion portion (12) is provided with a transition corner (121) along an axial edge of the body portion (11).

4. The coating apparatus according to any one of claims 1 to 3, further comprising a bracket (3) and a scraper (2), wherein the scraper (2) is installed on the bracket (3), and the scraper (2) is located at an outer side of the protrusion portion (12) and configured to scrape away excessive coating material on the coating surface (T).

5. The coating apparatus according to claim 4, wherein a plurality of micro-grooves are distributed on the coating surface (T), and the scraper (2) is in contact with the coating surface (T).

6. The coating apparatus according to claim 4 or 5, wherein a recess portion (21) is disposed at a side of the scraper (2) facing the protrusion portion (12), wherein the protrusion portion (12) extends into the recess portion (21).

7. The coating apparatus according to claim 6, wherein the recess portion (21) comprises a first side wall (211) and two second side walls (212); the first side wall (211) is connected between the two second side walls (212); the first side wall (211) extends along an axial direction of the body portion (11) and is configured to scrape away excessive coating material on the coating surface (T); and the two second side walls (212) are respectively located on two sides in the axial direction of the protrusion portion (12).

8. The coating apparatus according to any one of claims 4 to 7, further comprising a storage tank (4) for accommodating a coating material, wherein the roller (1) is located above the storage tank (4); the protrusion portion (12) is configured to pick up coating material from the storage tank (4) during rotation of the roller (1); the top of the protrusion portion (12) is configured to come into contact with a to-be-coated component; and the scraper (2) is located at a side portion of the protrusion portion (12).

9. The coating apparatus according to any one of claims 4 to 8, wherein an axial position of the scraper (2) along the body portion (11) is adjustable with respect to the bracket (3).

10. The coating apparatus according to any one of claims 4 to 9, wherein the scraper (2) is provided with a first mounting hole (22); and the bracket (3) comprises:
a mounting base (31), provided with a groove (311), wherein the bottom of the groove (311) is provided with a guide groove (312), and the groove (311) and the guide groove (312) both extend along an axial direction of the body portion (11);
a press-fitting component (32), configured to press the scraper (2) into the groove (311), wherein the press-fitting component (32) is provided with a through groove (321) extending along the axial direction;
a movable block (33), disposed outside the press-fitting component (32), wherein the movable block (33) is provided with a second mounting hole (331); and
a fastener (34), sequentially running through the second mounting hole (331), the through groove (321), the first mounting hole (22), and the guide groove (312) so as to fasten the scraper (2).

11. An electrode plate production system, comprising: the coating apparatus according to any one of claims 1 to 10, wherein the to-be-coated component is a current collector (1011) of an electrode plate, and the protrusion portion (12) is configured to apply an insulating material onto a first region (S1) on the current collector (1011) passing through the roller (1).

12. The electrode plate production system according to claim 11, wherein the current collector (1011) comprises a plurality of first regions (S1) spaced apart along a width direction; each of the first regions (S1) extends along a length direction of the electrode plate; a plurality of protrusion portions (12) are spaced apart along an axial direction of the body portion (11); and the plurality of protrusion portions (12) are configured to respectively coat the plurality of first regions (S1) with the insulating material.

13. An electrode plate production method, comprising:
making a current collector (1011) of an electrode plate pass over a roller (1) in a coating apparatus, wherein the roller (1) comprises: a body portion (11) and a protrusion portion (12), wherein the protrusion portion (12) is disposed on an outer surface of the body portion (11) and extends along an entire circumference of the body portion (11); and
making the roller (1) rotate around its axis so that a first region (S1) on the current collector (1011) is coated with an insulating material through the protrusion portion (12).

14. The electrode plate production method according to claim 13, further comprising:
coating a second region (S2) on the current collector (1011) with an undercoat material before coating the first region (S1) with the insulating material, wherein the first region (S1) and the second region (S2) are arranged side by side in a width direction of the current collector (1011), and the first region (S1) is located at a side close to a tab (101 1B).

15. The electrode plate production method according to claim 14, further comprising:
drying the insulating material after coating the first region (S1) with the insulating material; and
coating the undercoat material with an active substance and drying the active substance.
